Europäisches Patentamt

European Patent Office

Office européen des brevets

(11) Veröffentlichungsnummer: **0 189 542**

A2

(12) **EUROPÄISCHE PATENTANMELDUNG**

(21) Anmeldenummer: 85114830.4

(22) Anmeldetag: 22.11.85

(51) Int. Cl.⁴: **H 01 M 10/12**

(30) Priorität: 30.01.85 DE 3503017

(43) Veröffentlichungstag der Anmeldung:
06.08.86 Patentblatt 86/32

(84) Benannte Vertragsstaaten:
AT DE FR GB SE

(71) Anmelder: VARTA Batterie Aktiengesellschaft
Am Leineufer 51
D-3000 Hannover 21(DE)

(72) Erfinder: Salamon, Klaus, Dr. Dipl.-Phys.
Am Waldeck 16
D-6233 Kelkheim(DE)

(74) Vertreter: Kaiser, Dieter Ralf, Dipl.-Ing.
Gundelhardtstrasse 72
D-6233 Kelkheim/Ts.(DE)

(54) Bleiakkumulator mit im Separator und in den Elektroden festgelegtem Elektrolyten.

(57) Bei einem in Modulbauweise zusammensetzbaren 4 Volt-Bleiakkumulator mit festgelegtem Elektrolyten umfaßt ein Grundmodul zwei in einer Ebene liegende und mit Ableiterfahnen 3, 4 versehene Einzelelektroden 1, 2 sowie in einer dazu parallelen Ebene zwei weitere Elektroden 5, 6 als quasi bipolare Doppelplatte mit einem Verbundungsstreifen 7, jedoch ohne Ableiterfahnen und so orientiert, daß mit zwischengelegten elektrolytabsorbierenden Vliesseparatoren 8 jeweils gegenpolige Elektroden einander gegenüberstehen. Die Vliese und die Einzelelektroden sind um die Breite des Verbindungsstreifens seitlich auseinandergerückt, so daß sich zwischen ihnen anstelle einer Zellentrennwand ein elektrisch und elektrolytisch isolierender Zwischenraum 9 befindet. In einem trennwandlosen Behälter 10 lassen sich je nach gewünschter Kapazität mehrere 4 Volt-Grundmodule parallel zu einer 4 Volt-Batterie zusammenschalten.

EP 0 189 542 A2

-A-

## Bleiakkumulator mit im Separator und in den Elektroden festgelegtem Elektrolyten

Die Erfindung betrifft einen Bleiakkumulator mit positiven und negativen Elektroden und einem im Separator und den Elektroden festgelegten Elektrolyten.

In der Bleiakkumulatorenfertigung ist man mehr denn je daran interessiert, teure Rohstoffe einzusparen und insbesondere die an der Stromlieferung beteiligten Aktivmaterialien mit größtmöglichem Ausnutzungsgrad einzusetzen. Anders als bei den alkalischen Akkumulatoren geht beim Bleiakkumulator auch der Schwefelsäureelektrolyt in den Bruttoumsatz mit ein, weshalb es möglich ist, die aktiven Zellenbestandteile so aufeinander abzustimmen, daß die Schwefelsäure die Kapazität begrenzt.

Akkumulatoren, bei denen nach dem vorstehenden Gattungsbegriff die Schwefelsäuremenge derart reduziert ist, daß sie zur Sättigung des Porensystems der Elektroden und der Separation nicht ausreicht und somit im Zellengefäß kein freier Elektrolyt vorhanden ist, erfüllen außerdem die Voraussetzung für eine Sauerstoffverzehr-Reaktion während des Ladens oder Überladens und lassen sich zumindest wartungsfrei betreiben. Als Separatoren haben sich in diesem Zusammenhang Glasfasermatten mit besonderen Absorptionseigenschaften bewährt.

Aus der DE-OS 3 106 203 ist ein mehrzelliger Bleiakkumulator bekannt, der nicht nur in der erwähnten Weise auf der Grundlage eines festgelegten Elektrolyten arbeitet, wobei den Elektrodenplatten dennoch eine für ihre elektrochemischen Bedürfnisse ausreichende Elektrolytmenge zur Verfügung steht, sondern der sich dank konstruktiver Maßnahmen auch durch einen geringeren Bleibedarf für die lediglich stromleitenden Gerüstteile im Vergleich zu konventionellen Bleibatterien auszeichnet. Diese Bleieinsparung gelang mit Hilfe einer Elektrodenanordnung, bei der Doppelplatten reihenweise so aufeinander geschichtet werden, daß die bipolaren Doppelplatten der jeweils nächsten Schicht um eine Einzelplattenbreite versetzt sind und demnach stets gegenpolige Platten einander gegenüberliegen, wobei die durch die Versetzung erzeugten jeweiligen seitlichen Überstände von "halben" Doppelelektroden durch Einzelelektroden, welche Stromableiter besitzen, elektrisch ausgeglichen sind. Peripher angeordnete flache Stege verbinden jeweils die Hälften einer Doppelplatte miteinander und stellen zugleich Zwischenzellenverbinder dar, die aber nicht dichtend durch die Zellentrennwände hindurch bzw. über sie hinweggeführt sind. Diese Stege entsprechen konventionellen Zellenverbindern.

Eine ähnliche Batteriekonstruktion mit Lagen aus coplanaren Doppelplatten im Wechsel mit Lagen, die eine Doppelplatte weniger und dafür zwei endständige unipolare Einzelplatten enthalten, ist der EP-OS 107 976 entnehmbar. Die Doppelplatten sind jedoch so angeordnet, daß ihre positiven Hälften alle in einer Reihe, ihre negativen Hälften in einer dazu parallelen Reihe liegen, wobei sich die Polarität der Reihen von Schicht zu Schicht umkehrt und daß in der Trennebene zwischen den Reihen außer schmalen Stegbrücken, welche positive und negative Plattenhälften paarweise zu den Doppelplatten verbinden, ein durchgehender Luftspalt vorhanden sein muß.

Der Erfindung liegt die Aufgabe zugrunde, einen Bleiakkumulator mit festgelegtem Elektrolyt anzugeben, der über den vorbeschriebenen Stand der Technik hinaus Möglichkeiten einer noch weitergehenden Rationalisierung hinsichtlich seines Aufbaues und des Einsatzes von Blei eröffnet, ohne daß dafür Einbußen an elektrischer Leistung in Kauf genommen werden müssen. Neben der baulichen Vereinfachung soll zugleich ein geringerer fertigungstechnischer Aufwand erzielt werden und das Bauvolumen des Akkumulators soll beträchtlich verringert werden.

Diese Aufgabe wird erfindungsgemäß mit den im kennzeichnenden Teil des Anspruchs 1 angegeben Mitteln gelöst.

Ausgangspunkt der Erfindung ist die Verfügbarkeit von extrem absorptionsfähigen Separatoren insbesondere in Vliesform, in denen der Elektrolyt durch Kapillarkräfte vollständig auf die Geometrie des Separators begrenzt wird. Damit gelingt es, den Elektrolyten quasi scheibchenweise zwischen die Elektroden zu bringen. Als Materialien für solche Separatoren sind Glasvliese, Polypropylenvliese, Polyestervliese sowie Polycarbonatvliese geeignet. Bei Verwendung von Kunststoffvliesen kann die Benetzbarkeit durch Netzmittel in an sich bekannter Weise verbessert werden. Weiterer Elektrolyt ist in den positiven und negativen Elektroden gespeichert, ohne indessen deren Porenvolumen vollständig auszufüllen.

Durch die Begrenzung des gesamten Zellelektrolyten auf die Geometrie des Vliesseparators und der Elektroden ist es erfindungsgemäß möglich, einen Akkumulator völlig ohne isolierende Trennwand zwischen zwei benachbarten elektrochemischen Zellen aufzubauen. Den Übergang von einer Zelle in die andere, der allein elektronenleitend sein muß, bildet ein metallischer Verbindungsstreifen zwischen den gegenpoligen Hälften einer quasi bipolaren Doppelplatte, deren eine Platte stets der einen Zelle und deren andere Platte stets der anderen Zelle zugeordnet ist.

Erfindungsgemäß ist der genannte Verbindungsstreifen nicht stegartig ausgebildet, sondern erstreckt sich über die Seitenlänge der zu verbindenden Plattenränder. Dadurch sind die coplanaren Doppelplattenhälften hinsichtlich ihres Seitenabstandes unverrückbar fest fixiert, und der Elektronenfluß zwischen den beiden gegenpoligen Platten wird gleichmäßig über kürzeste Entfernungen geleitet.

Die elektrische und mechanische Verbindung erstreckt sich über 60% bis 95%, vorzugsweise 70% bis 90%, und besonders bevorzugt ca. 80% der Seitenlänge der Platten. Die Ausnehmung bzw. Einkerbung, die an beiden Seiten des Verbindungsstreifens 7 entsteht, kann zur Positionierung im Gehäuse 10 benutzt werden. Dazu kann beispielsweise an der Gehäuseinnenwand eine Rippe vorgesehen sein, die in die Aussparungen eingreift.

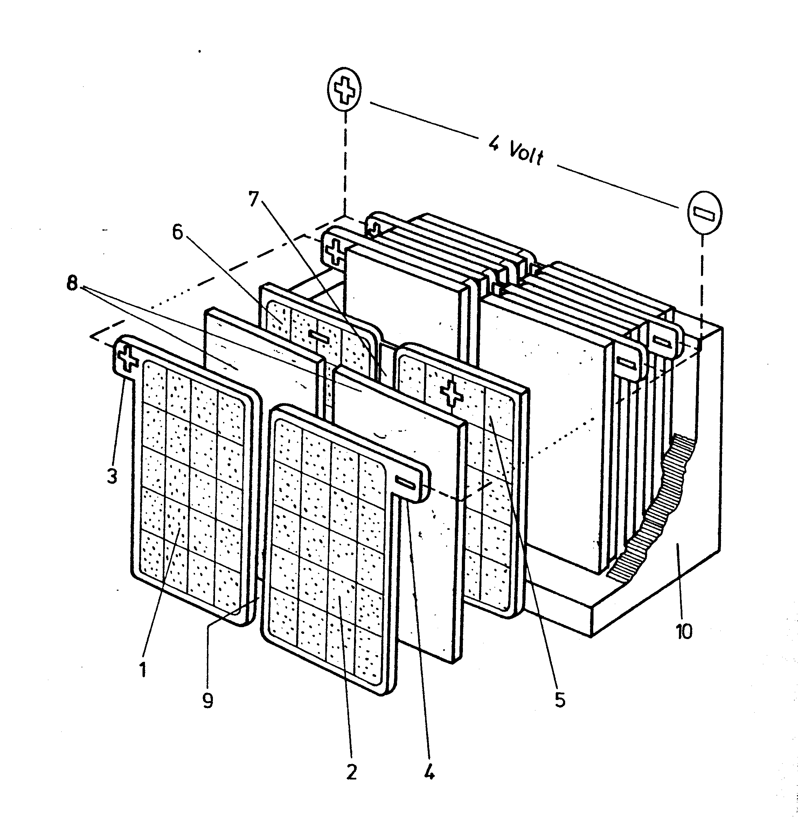

Anhand der Figur wird die erfindungsgemäße Anordnung der Elektroden verdeutlicht.

Nach der Figur liegen zwei mit den Fahnenableitern 3, 4 versehene Einzelelektroden 1, 2 entgegengesetzter Polarität nebeneinander, jedoch ohne elek-

trischen und elektrolytischen Kontakt in einer ersten Ebene. In einer dazu parallelen zweiten Ebene sind eine weitere positive Elektrode 5 und eine weitere negative Elektrode 6 durch den Verbindungsstreifen 7 zu einer Doppelplatte verbunden und so orientiert, daß sich jeweils die positive Elektrode in der einen Ebene und die negative Elektrode in der anderen Ebene einander gegenüberliegen.

Als Separation sind beispielsweise zwei Glasvliese 8 von mindestens gleicher Flächengröße wie diejenige der Einzelelektroden vorgesehen. Ihr gegenseitiger Abstand wird im wesentlichen durch die Breite des Verbindungsstreifens 7 bestimmt. Dies aber bedingt eine Anpassung der beiden Einzelelektroden 1, 2 in der ersten Ebene an den gleichen Abstand, so daß ein ca. 5 - 10 mm breiter Zwischenraum 9 sowohl die Einzelelektroden als auch die Vliesseparatoren seitlich voneinander trennt.

Der Bau eines erfindungsgemäßen Akkumulators kann mit unformierten oder formierten Platten durchgeführt werden.

Wird der Bau mit unformierten Platten durchgeführt, so wird die quasi bipolare Elektrode derart hergestellt, daß die eine Hälfte des Doppelgitters mit positiver aktiver Masse und die andere Hälfte mit negativer aktiver Masse pastiert wird. Zur Aktivierung der Batterie wird nach den bekannten Regeln der Blockkastenformation verfahren, d.h. die Formation erfolgt im fertigen Zellenbehälter.

Beim Aufbau des Akkumulators mit trocken lagerfähigen geladenen Platten werden die Doppelplatten in üblicher Tankformation formiert.

Um die quasi bipolaren Doppelplatten zu erhalten, werden zunächst alle Platten beider Polarität an der Füßchenleiste getrennt und es werden im gleichen Arbeitsgang die Ableiterfahnen abgeschnitten. In einem weiteren Arbeitsgang werden dann je eine positive formierte und eine negative formierte Doppelplattenhälfte an den Elektrodenrändern zusammengeschweißt. Diese Verschweißung stellt die Verbinderbrücke 7 dar. Es hat sich als vorteilhaft erwiesen, diese Verschweißung zur quasi bipolaren Doppelplatte mit einem

- 5 -

Laserstrahl durchzuführen. Aber auch die Verschweißung mit einer Lötflamme hat zu befriedigenden Ergebnissen geführt. Die Befüllung des trocken geladenen Doppelplattenakkumulators mit Schwefelsäure muß jedoch so erfolgen, daß kein Zwischenraum mit Säure ausgefüllt wird, da sonst ein Elektrolyt-Kurzschluß eine schnelle Entladung der Batterie herbeiführen würde.

Der Aufbau des Akkumulators kann durch horizontale oder vertikale Schichtung der Elektroden erfolgen. In jedem Fall ist mit den in der Figur durch Aufgliederung hervorgehobenen Platten 1, 4 und 5, 6 nachdem dieser Aufbau noch mit Schwefelsäure z.B. der Dichte 1, 28 g/cm³ getränkt und ein nicht durch Kapillarkräfte gebundener Schwefelsäureüberschuß entfernt worden ist, so daß insbesondere in dem erwähnten Zwischenraum (9) kein Tropfen freien Elektrolyts vorhanden ist , der Grundmodul einer 4 Volt-Batteie geschaffen.

Durch Hinzufügen bzw. Aufschichten weiterer Grundmoduln mit identischer Plattenfolge und deren Parallelverschaltung entsteht eine erfindungsgemäße 4 Volt-Batterie, deren Kapazität nach Maßgabe der am Aufbau beteiligten Moduln beliebig variiert werden kann.

In der Figur ist ein trennwandloser Kunststoffbehälter (10) bereits mit zwei Grundmoduln gemäß der Erfindung bestückt. Nach Auffüllen mit den Platten des ersten Grundmoduls und dem elektrischen Verbinden der positiven und der negativen Fahnenableiter untereinander (gestrichelte Linien) wird eine 4 Volt-Batterie mit der 3fachen Kapazität eines Grundmoduls erhalten.

Aus Gründen der Kurzschlußsicherheit ist es vorteilhaft, die Parallelverschaltung im Außenbereich des Batteriebehälters vorzunehmen. Die Polableitungen sämtlicher Einzelplatten sind daher getrennt durch die Gehäusewand geführt und außerhalb des Zellenbehälters untereinander verbunden. Wegen des Fehlens von freiem Säureelektrolyt im Behälter ist im übrigen die Korrosions- und Leckgefahr bei einer solchen Modul-Batterie, insbesondere an den Ableiterdurchführungen durch die Behälterwand auf ein Minimum reduziert. Um die Zuverlässigkeit der erfindungsgemäßen Batterie noch weiter zu erhöhen, kann es zweckmäßig sein, die Verbindungsstreifen 7 mit einer hydrophoben Schicht zu versehen. Dazu kann beispielsweise auf diesen Streifen eine PTFE-Disper-

-6-

sion aufgetragen werden.

Besonders vorteilhaft lassen sich 4 Volt-Modulbatterien gemäß der Erfindung mit weiteren gleichen Einheiten in Serie, z.B. zu einem 12 Volt-Aggregat, zusammenschalten. Dabei zeichnet sich eine solche Batterie für Starterzwecke durch eine sehr flache Bauweise mit geringem Volumen und durch niedriges Gewicht aus.

Reg.-Nr. 6FP 456-DT

22.03.1985

TAP-Dr. Ns/pr

VARTA Batterie Aktiengesellschaft

3000 Hannover 21, Am Leineufer 51

Patentansprüche

1. Bleiakkumulator mit positiven und negativen Elektroden und einem im Separator und den Elektroden festgelegten Elektrolyten, dadurch gekennzeichnet, daß in einem im wesentlichen dicht verschlossenen Zellenbehälter (10) in mindestens einer ersten Ebene eine positive Einzelelektrode (1) und eine negative Einzelelektode (2) nebeneinander, jedoch elektrisch und elektrolytisch voneinander getrennt, angeordnet und mit Stromableitungen (3, 4) versehen sind und daß in mindestens einer dazu parallelen zweiten Ebene eine weitere positive Elektrode (5) und eine weitere negative Elektrode (6) in gegenpoliger Anordnung zu den ersten Elektroden vorgesehen sind, die miteinander elektrisch leitend verbunden sind und daß zwischen je zwei Elektroden ein elektrolytabsorbierender Separator (8) vorgesehen ist.

2. Bleiakkumulator nach Anspruch 1, dadurch gekennzeichnet, daß die elektrisch leitende Verbindung zwischen den Elektroden der zweiten Ebene ein sich über die Seitenlänge der Elektroden erstreckender Verbindungsstreifen 7 ist und daß die Elektroden der ersten Ebene sowie die Separatoren durch einen Zwischenraum 9 voneinander getrennt sind.

3. Bleiakkumulator nach den Ansprüchen 1 und 2, dadurch gekennzeichnet, daß der Verbindungsstreifen aus Blei ist.

4. Bleiakkumulator nach den Ansprüchen 1 bis 3, dadurch gekennzeichnet, daß der Verbindungsstreifen (7) aus den durch Laserschweißung verbundenen Rändern der Elektroden (5, 6) besteht.

5. Bleiakkumulator nach den Ansprüchen 1 bis 4, dadurch gekennzeichnet, daß die Stromableitungen (3, 4) sämtlicher Einzelelektroden (1, 2) getrennt durch die Wand des Zellenbehälters (10) geführt sind und außerhalb des Zellenbehälters (10) untereinander elektrisch verbunden sind.

6. Bleiakkumulator nach den Ansprüchen 1 bis 5, dadurch gekennzeichnet, daß drei in Zellenbehältern (10) angeordnete Zellen aneinander gestapelt und elektrisch zu einer 12 Volt-Batterie verbunden sind.

0189542

4 Volt